# EUROPEAN PATENT APPLICATION

(11) **EP 4 714 262 A1**
(43) Date of publication of application: **25.03.2026**
(21) Application number: 24873862.7
(22) Date of filing: 18.09.2024
(51) Int. Cl.: A01K 13/00, F16H 19/02

(54) **PET DOG FOOT CLEANER**

(30) Priority: 16.07.2024 CN 202421686758 U; 16.07.2024 CN 202421686734 U; 16.07.2024 CN 202421686806 U; 16.07.2024 CN 202410946857
(71) Applicant: Dongguan Aobbi Electric Appliances Ltd, Dongguan, Guangdong 523000 (CN)
(72) Inventor: WANG, Xinhua, Dongguan Guangdong 523000 (CN); JIANG, Xinglin, Dongguan Guangdong 523000 (CN); LIU, Haiqing, Dongguan Guangdong 523000 (CN)
(74) Representative: Metida
(86) International application number: PCT/CN2024/119363
(87) International publication number: WO 2026/016282

(57) **Abstract**

Provided is a pet dog paw cleaner, including a base, a cleaning assembly and a drive assembly; the base includes a base body and a receptacle cup arranged on one side of the base body; the cleaning assembly includes an inner cup body, soft bristles evenly arranged and spaced along an inner wall of the inner cup body, a rotating shaft coaxially mounted at a bottom of the inner cup body, a paw support rotatably mounted at a top end of the rotating shaft, and a driven gear coaxially mounted at a bottom end of the rotating shaft; and the inner cup body is rotatably mounted inside the receptacle cup, the bottom end of the rotating shaft passes through the base body and is connected to the driven gear, and the drive assembly drives the inner cup body to rotate,,the inner cup body is driven to rotate by the foot pedal, the soft bristles to rotate and clean the paw of pet dog, which cannot only effectively reduce the physical burden of the pet owner but also improve the cleaning efficiency. In addition, the pet dog paw cleaner exhibits a simple structure and low production costs, easy to use, facilitating rapid assembly and mass production.

## Description

### TECHNICAL FIELD

The present invention belongs to the field of pet dog paw cleaners, and particularly relates to a pet dog paw cleaner.

### BACKGROUND

In modem society, pet dogs have become one of important members of many families, providing their owners with great joy and companionship. With the enhancement of awareness of pet care, daily care of pet dogs has become a key concern for pet owners. Walking the pet dogs is a necessary daily activity, but subsequent cleaning work is tedious and exhausting, especially after outdoor activities, paws of pet dogs are usually stained with dirt, dust, and other pollutants, which not only pollute a home environment but also foster bacteria, posing a potential health risk to both the pet dogs and family members.

However, manually washing the paws of pet dogs is time-consuming and labor-intensive, especially for large dogs or families with several dogs, placing a considerable physical burden on the pet owner. Moreover, when the paws of pet dogs are washed manually, the paws and claws of pet dogs will come into direct contact with the owner's hands or clothing, increasing a risk of cross-infection. Under the condition that the dogs suffer from a skin disease or other infectious diseases, direct contact may further spread pathogens.

### SUMMARY

### (1) Technical problem to be solved

The present invention discloses a pet dog paw cleaner, which aims to solve the problems that manual cleaning of paws of pet dogs is time-consuming and labor-intensive, and has a risk of infection.

### (2) Technical solution

The present invention discloses a pet dog paw cleaner, including:
a base, including a base body and at least one receptacle cup arranged on one side of the base body;
at least one cleaning assembly rotatably mounted on the base, where the cleaning assembly includes an inner cup body, soft bristles evenly arranged and spaced along an inner wall of the inner cup body, a rotating shaft coaxially mounted at a bottom of the inner cup body, a paw support rotatably mounted at a top end of the rotating shaft, and a driven gear coaxially mounted at a bottom end of the rotating shaft; and the inner cup body is rotatably mounted inside the receptacle cup, and the bottom end of the rotating shaft passes through the base body and is then coaxially connected to the driven gear;
a drive assembly connected to the cleaning assembly, where the drive assembly includes a foot pedal that passes through and is elastically connected to the base body, a power shaft rotatably mounted on a bottom surface of the base body, and at least one driving gear mounted on the power shaft; and the driving gear is matched and meshed with the driven gear; and
when the foot pedal moves up and down, the power shaft is driven to rotate, and the driving gear, the driven gear and the inner cup body are driven to rotate synchronously.

Further, the drive assembly further includes a coupling member coaxially mounted at one end of the power shaft; and a bottom end of the foot pedal extends through the base body and is then hinged to a connecting rod, and an end of the connecting rod away from the foot pedal is hinged to one side of the coupling member.

Further, the drive assembly further includes a coupling member coaxially mounted at one end of the power shaft; the bottom end of the foot pedal passes through the base body and is connected to a driving plate, and a sliding groove is formed inside the driving plate; a height difference is designed between two ends of the sliding groove in a vertical direction; and one side of the coupling member is connected to a boss, and the boss is matched and embedded inside the sliding groove.

Further, the sliding groove is a curved sliding groove or a polygonal sliding groove.

Further, the drive assembly further includes a first transmission gear coaxially mounted at the one end of the power shaft, a transmission shaft rotatably mounted on one end of the power shaft, a second transmission gear coaxially mounted at one end of the transmission shaft close to the power shaft, and a synchronous gear coaxially mounted in a middle of the transmission shaft; an opening slot is formed inside the foot pedal, and the synchronous gear is located inside the opening slot; a synchronous rack matched and meshed with the synchronous gear is arranged on an inner wall of one side of the opening slot; and the first transmission gear is matched and meshed with the second transmission gear, and the second transmission gear has a rotational direction same as a rotational direction of the synchronous gear.

Further, an auxiliary rack is arranged on an inner wall of the other side of the opening slot relative to the synchronous rack; and an auxiliary gear is arranged on the transmission shaft, the auxiliary gear and the transmission shaft rotate relative to each other, the auxiliary gear is located inside the opening slot, and the auxiliary gear is matched and meshed with the auxiliary rack.

Further, the auxiliary rack is arranged in a staggered manner with the synchronous rack, and a rotational direction of the auxiliary gear is opposite to that of the synchronous gear.

Further, an elastic member is mounted between the foot pedal and the base body, and the elastic member is configured to elastically support the foot pedal.

Further, when two or more of the cleaning assemblies are provided, rotational directions of the different inner cup bodies are opposite or the same.

Further, a top surface of the paw support is evenly provided with a plurality of anti-slip protrusions; and the base further includes a drying recess arranged on one side of the receptacle cup, and a water-absorbing pad is installed inside the drying recess.

Compared with the prior art, the present invention has the beneficial effects:
The inner cup body is driven to rotate by the foot pedal, the soft bristles to rotate and clean the paw of pet dog, which cannot only effectively reduce the physical burden of the pet owner but also improve the cleaning efficiency. In addition, the pet dog paw cleaner exhibits a simple structure and low production costs, easy to use, facilitating rapid assembly and mass production.

### BRIEF DESCRIPTION OF THE DRAWINGS

FIG. 1 is a schematic diagram of an overall structure of the present invention.
FIG. 2 is a schematic diagram of an overall bottom structure of the present invention.
FIG. 3 is a sectional view of a cleaning assembly of the present invention.
FIG. 4 is a structural schematic diagram of a drive assembly according to a first embodiment of the present invention.
FIG. 5 is a structural schematic diagram of a drive assembly according to a second embodiment of the present invention.
FIG. 6 is a partial exploded view of a drive assembly according to a second embodiment of the present invention.
FIG. 7 is a schematic diagram of a polygonal sliding groove of a drive assembly according to a second embodiment of the present invention.
FIG. 8 is a structural schematic diagram of a drive assembly according to a third embodiment of the present invention.
FIG. 9 is an enlarged view of portion A in FIG. 8 of the present invention.
FIG. 10 is a structural schematic diagram of a foot pedal of a drive assembly according to a third embodiment of the present invention.

Reference numerals in the accompanying drawings: 10-base; 11-base body; 12-receptacle cup; 13-cup lid; 14-drying recess; 20-cleaning assembly; 21-inner cup body; 22-soft bristle; 23-rotating shaft; 24-paw support; 25-driven gear; 30-drive assembly; 31-power shaft; 310-bearing; 32-driving gear; 33-coupling member; 330-boss; 34-foot pedal; 341-opening slot; 342-synchronous rack; 343-auxiliary rack; 35-connecting rod; 36-driving plate; 360-sliding groove; 37-first transmission gear; 371-transmission shaft; 372-second transmission gear; 373-synchronous gear; 374-auxiliary gear; 38-elastic member.

### DETAILED DESCRIPTION OF EMBODIMENTS

In order to make the objectives, technical solutions, and advantages of the embodiments of the present invention clearer, the technical solutions of the embodiments of the present invention will be described clearly and completely with reference to the accompanying drawings of the embodiments of the present invention. Apparently, the described embodiments are some, but not all, embodiments of the present invention. Based on the embodiments of the present invention, all other embodiments acquired by those of ordinary skill in the art without making creative efforts will fall within the scope of protection of the present invention.

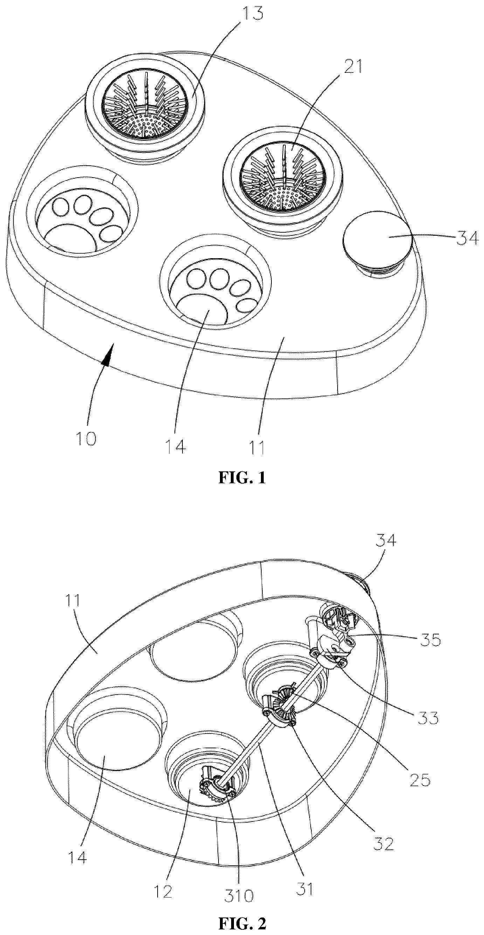

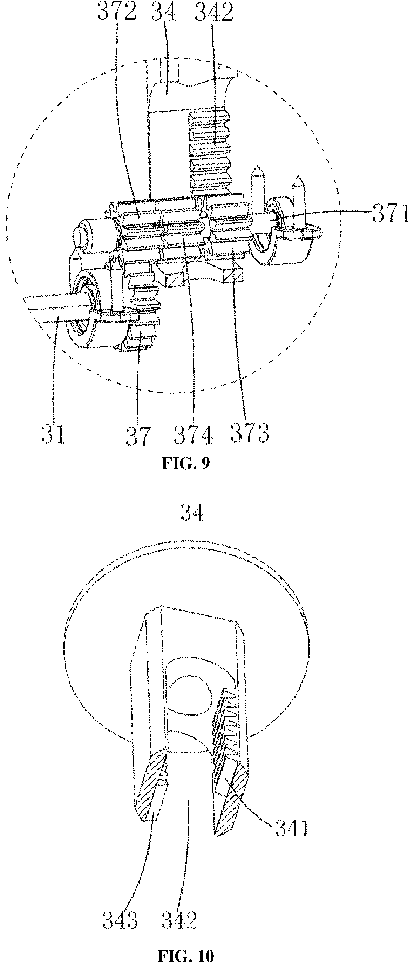

As shown in FIGs. 1-10, the present invention discloses a pet dog paw cleaner, including a base 10, at least one cleaning assembly 20 rotatably mounted on the base 10, and a drive assembly 30 connected to the cleaning assembly 20.

The base 10 includes a base body 11, at least one receptacle cup 12 arranged on one side of the base body 11, a cup lid 13 detachably mounted on a top of the receptacle cup 12, and a drying recess 14 arranged on one side of the receptacle cup 12; and a water-absorbing pad (not shown in the figures) is installed inside the drying recess 14 to absorb moisture from a paw of pet dog, facilitating wiping of water droplets. Specifically, a bottom end of the receptacle cup 12 is provided with a through hole (not shown in the figures), and the receptacle cup 12 is configured to receive and mount the cleaning assembly 20.

The cleaning assembly 20 includes an inner cup body 21, soft bristles 22 evenly arranged and spaced along an inner wall of the inner cup body 21, a rotating shaft 23 coaxially mounted at a bottom of the inner cup body 21, a paw support 24 rotatably mounted at a top end of the rotating shaft 23, and a driven gear 25 coaxially mounted at a bottom end of the rotating shaft 23.

Specifically, the inner cup body 21 is rotatably mounted inside the receptacle cup 12, the rotating shaft 23 is fixedly connected to the inner cup body 21, the bottom end of the rotating shaft 23 is coaxially connected to the driven gear 25 after passing through the through hole, and the driven gear 25 is configured to connect the drive assembly 30 downward to obtain rotational power.

In this embodiment, the top end of the rotating shaft 23 extends toward the paw support 24 and is rotatably connected to a bottom of the paw support 24, that is to say, when the rotating shaft 23, the inner cup body 21, and the paw support 24 are coaxially arranged, the paw support 24 and the inner cup body 21 can rotate relative to each other, where a top surface of the paw support 24 is evenly provided with a plurality of anti-slip protrusions (not shown in the figures) to increase the anti-slip properties of the paw support 24, and the paw support 24 is configured to support the paws of pet dog.

In this embodiment, the soft bristles 22 are made of soft silicone bristles or soft nylon bristles.

Specifically, in a first embodiment, as shown in FIGs. 1-4, the drive assembly 30 includes a power shaft 31 rotatably mounted on a bottom surface of the base body 11, at least one driving gear 32 mounted on the power shaft 31, a coupling member 33 coaxially mounted at one end of the power shaft 31, and a foot pedal 34 elastically connected to the base body 11; and a bottom end of the foot pedal 34 extends through the base body 11 and is then hinged to a connecting rod 35, one end of the connecting rod 35 away from the foot pedal 34 is hinged to one side of the coupling member 33, and the driving gear 32 is matched and meshed with the driven gear 25;
when in use, the foot pedal 34 is repeatedly pressed toward a bottom of the base body 11, and the power shaft 31 is driven to rotate through coordinated action of the connecting rod 35 and the coupling member 33, such that the driving gear 32, the driven gear 25, and the inner cup body 21 are driven to rotate synchronously;

Further, the connecting rod 35 is arranged as a straight rod body, and the coupling member 33 is arranged as a fan-shaped block body; alternatively, the connecting rod 35 is arranged as an arc-shaped rod body, and the coupling member 33 is arranged as a straight block body. Therefore, the connecting rod 35 and the coupling member 33 can function as a crank-rod drive mechanism, and specific shapes thereof are not limited herein.

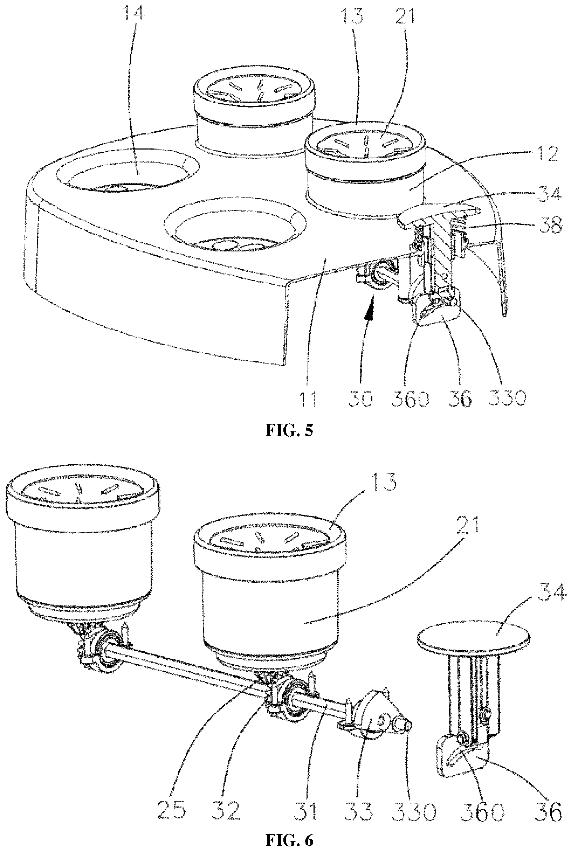

In a second embodiment, as shown in FIGs. 5-6, the drive assembly 30 includes a power shaft 31 rotatably mounted on a bottom surface of the base body 11, at least one driving gear 32 mounted on the power shaft 31, a coupling member 33 coaxially mounted at one end of the power shaft 31, and a foot pedal 34 elastically connected to the base body 11; and a bottom end of the foot pedal 34 passes through the base body 11 and is fixedly connected to a driving plate 36, the driving plate 36 is provided with a sliding groove 360, one side of the coupling member 33 is connected to a boss 330, and the boss 330 is matched and embedded inside the sliding groove 360; where the driving gear 32 is matched and meshed with the driven gear 25; and
in this embodiment, a height difference is designed between one end of the sliding groove 360 and the other end thereof in a vertical direction; when the driving plate 36 moves up and down, the boss 330 slides along a track of the sliding groove 360. Due to the height difference design of the sliding groove 360, the boss 330 will experience a path change combined by a vertical direction and a horizontal direction during a sliding process, the path change drives the boss 330 to move inside the sliding groove 360, and applies force with a constantly changing direction to the coupling member 33, and the force is effectively transmitted to the power shaft 31 through the coupling member 33. Since the direction of the force is constantly changing, the power shaft 31 is subjected to a rotational torque, thereby beginning to rotate.

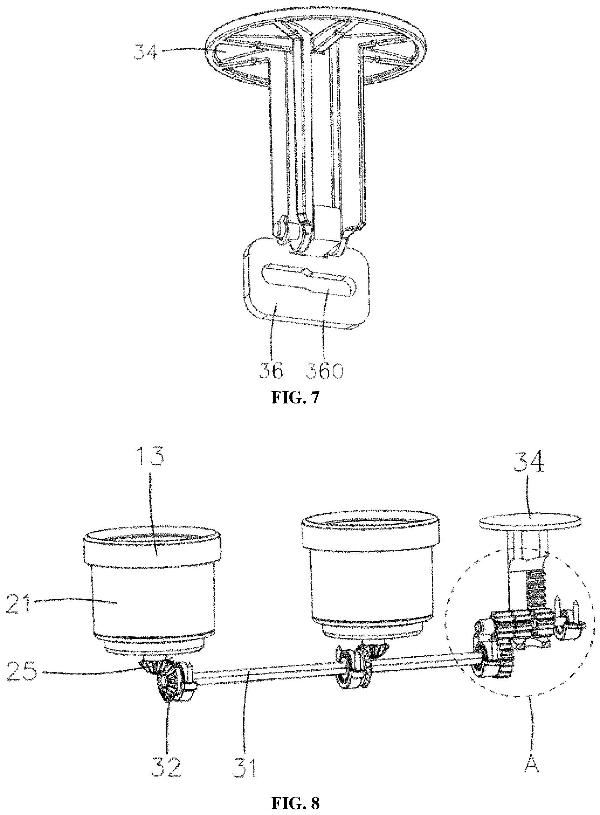

Further, as shown in FIG. 7, the sliding groove 360 can be curved or polygonal, as long as the height difference exists in the vertical direction between the two ends of the sliding groove 360.

In a third embodiment, as shown in FIGs. 8-10, the drive assembly 30 includes a power shaft 31 rotatably mounted on a bottom surface of the base body 11, at least one driving gear 32 mounted on the power shaft 31, a first transmission gear 37 coaxially mounted at one end of the power shaft 31, a transmission shaft 371 rotatably connected at one end of the power shaft 31, a second transmission gear 372 coaxially mounted at one end of the transmission shaft 371 close to the power shaft 31, a synchronous gear 373 coaxially mounted in a middle of the transmission shaft 371, and a foot pedal 34 elastically connected to the base body 11; where an opening slot 341 is formed on the foot pedal 34 in a length direction, and the synchronous gear 373 is located inside the opening slot 341; a synchronous rack 342 is arranged on an inner wall of one side of the foot pedal 34 corresponding to the opening slot 341, and the synchronous rack 342 is matched and meshed with the synchronous gear 373, such that foot pedal 34 can drive the transmission shaft 371 to rotate through the synchronous rack 342 and synchronous gear 373; the first transmission gear 37 is matched and meshed with the second transmission gear 372, and the second transmission gear 372 has a rotational direction same as a rotational direction of the synchronous gear 373, which can drive the power shaft 31 to rotate synchronously with the transmission shaft 371; and the driving gear 32 is matched and meshed with the driven gear 25. Therefore, the foot pedal 34 drives the transmission shaft 371, the power shaft 31, the driving gear 32, and the driven gear 25, thereby driving the inner cup body 21 to rotate.

Further, in order to improve the stability of movement of the foot pedal 34, an auxiliary rack 343 is arranged on an inner wall of the other side of the foot pedal 34 corresponding to the opening slot 341 relative to the synchronous rack 342, and the auxiliary rack 343 is arranged in a staggered manner with the synchronous rack 342; an auxiliary gear 374 is mounted on a side of the transmission shaft 371 corresponding to the synchronous gear 373, the auxiliary gear 374 and the transmission shaft 371 can rotate relative to each other, that is, a rotational direction of the auxiliary gear 374 is opposite to that of the synchronous gear 373, the auxiliary gear 374 is located inside the opening slot 341, and is matched and meshed with the auxiliary rack 343, such that the foot pedal 34 can effectively reduce wobbling during movement and significantly improve the stability of the movement of the foot pedal 34. Positions of the auxiliary gear 374 and the synchronous gear 373 can be exchanged without affecting the overall driving performance.

Further, both the auxiliary gear 374 and the synchronous gear 373 are connected to the transmission shaft 371 via one-way bearings, ensuring that rotation axes of the auxiliary gear 374 and the synchronous gear 373 always align with an axis of the transmission shaft 371, effectively avoiding transmission locking phenomenon.

During a cleaning process, clean water or cleaning fluid is injected into an interior of the inner cup body 21, and a paw of the pet dog is then placed in the interior of the inner cup body 21 and has the pet dog stood on the paw support 24. Under a weight of the paw of pet day, positions of the paw support 24 and the base body 11 are relatively fixed, such that the paw support 24 is fixed but the inner cup body 21 can rotate freely, that is, the inner cup body 21 rotates relative to the paw support 24, while the inner cup body 21 and the driven gear 25 rotate synchronously.

Therefore, when the pet owner repeatedly steps on the foot pedal 34 to drive the power shaft 31 to rotate, the inner cup body 21 is driven to rotate through the driving gear 32 and the driven gear 25, and the rotation of the inner cup body 21 drives the soft bristles 22 to clean the paw of pet dog. After the cleaning is completed, the paw of pet dog is placed into the drying recess 14, and the paw of pet dog is then rubbed on the water-absorbing pad to absorb moisture, making the paw of pet dog easier to dry.

Of course, during actual cleaning, the paw of pet dog can also be suspended in the interior of the inner cup body 21, that is, the paw of pet dog does not come into contact with the paw support 24, which is convenient for cleaning a bottom of the paw and toes.

Further, the pet owner can also disassemble the entire inner cup body 21 by removing the cup lid 13 to facilitate replacement and cleaning the interior of the inner cup body 21.

In this embodiment, the power shaft 31 is mounted on the bottom surface of the base body 11 via a bearing 310, and a number of the driving gears 32 is equal to a number of cleaning assemblies 20, and they correspond in positions.

Specifically, as shown in FIG. 2 or 6, when two or more of the cleaning assemblies 20 are provided, rotational directions of different inner cup bodies 21 can be changed by setting different orientations of different driving gears 32.

When the driving gears 32 are set in reverse orientation, rotational directions of the different inner cup bodies 21 can be opposite; and when the driving gears 32 are set in a same direction, rotational directions of the different inner cup bodies 21 can be the same.

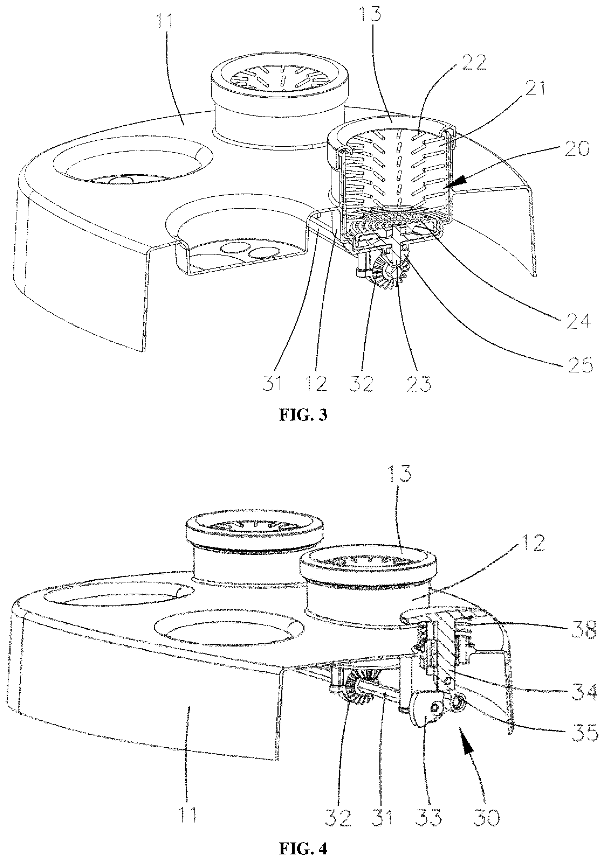

Specifically, as shown in FIGs. 4-5, an elastic member 38 is mounted between the foot pedal 34 and the base body 11, one end of the elastic member 38 is pressed against the foot pedal 34, and the other end thereof is pressed against the base body 11, such that an elastic mounting between the foot pedal 34 and the base body 11 is realized. The elastic member 38 can be a spring, a spring piece, soft silicone, or other elastic materials, which can elastically support the foot pedal 34, allowing it to automatically reset after being stepped on, and it is not limited to the mentioned elastic materials.

The innovation of the present invention is that the inner cup body is driven to rotate by the foot pedal, the soft bristles to rotate and clean the paw of pet dog, which cannot only effectively reduce the physical burden of the pet owner but also improve the cleaning efficiency. In addition, the pet dog paw cleaner exhibits a simple structure and low production costs, easy to use, facilitating rapid assembly and mass production.

In addition, it should be understood that although the description is described according to implementations, each implementation does not include only one independent technical solution, the description is for clarity only, and those skilled in the art should take the description as a whole, the technical solutions in the various embodiments may be appropriately combined to form other implementations understandable by those skilled in the art.

For those skilled in the art, it is apparent that the present invention is not limited to details of the exemplary embodiments, and the present invention can be implemented in other specific forms without departing from the spirit or basic features of the present invention. Therefore, the embodiments should be regarded as illustrative and non-restrictive no matter from which point of view. The scope of the present invention is defined by the appended claims rather than the above specification, and therefore, it is intended that all changes which fall within the meaning and scope of equivalency of the claims are embraced in the present invention. Any reference numeral in the claims should not be construed as limiting the related claims.

## Claims

1. A pet dog paw cleaner, **characterized by** comprising:
a base (10), comprising a base body (11) and at least one receptacle cup (12) arranged on one side of the base body (11);
at least one cleaning assembly (20) rotatably mounted on the base (10), **characterized in that** the cleaning assembly (20) comprises an inner cup body (21), soft bristles (22) evenly arranged and spaced along an inner wall of the inner cup body (21), a rotating shaft (23) coaxially mounted at a bottom of the inner cup body (21), a paw support (24) rotatably mounted at a top end of the rotating shaft (23), and a driven gear (25) coaxially mounted at a bottom end of the rotating shaft (23); and the inner cup body (21) is rotatably mounted inside the receptacle cup (12), and the bottom end of the rotating shaft (23) passes through the base body (11) and is then coaxially connected to the driven gear (25);
a drive assembly (30) connected to the cleaning assembly (20), **characterized in that** the drive assembly (30) comprises a foot pedal (34) that passes through and is elastically connected to the base body (11), a power shaft (31) rotatably mounted on a bottom surface of the base body (11), and at least one driving gear (32) mounted on the power shaft (31); and the driving gear (32) is matched and meshed with the driven gear (25);
when the foot pedal (34) moves up and down, the power shaft (31) is driven to rotate, and the driving gear (32), the driven gear (25) and the inner cup body (21) are driven to rotate synchronously.

2. The pet dog paw cleaner according to claim 1, **characterized in that** the drive assembly (30) further comprises a coupling member (33) coaxially mounted at one end of the power shaft (31); and a bottom end of the foot pedal (34) extends through the base body (11) and is then hinged to a connecting rod (35), and an end of the connecting rod (35) away from the foot pedal (34) is hinged to one side of the coupling member (33).

3. The pet dog paw cleaner according to claim 1, **characterized in that** the bottom end of the foot pedal (34) passes through the base body (11) and is connected to a driving plate (36), and a sliding groove (360) is formed inside the driving plate (36); a height difference is designed between two ends of the sliding groove (360) in a vertical direction; and one side of the coupling member (33) is connected to a boss (330), and the boss (330) is matched and embedded inside the sliding groove (360).

4. The pet dog paw cleaner according to claim 3, **characterized in that** the sliding groove (360) is a curved sliding groove or a polygonal sliding groove.

5. The pet dog paw cleaner according to claim 1, **characterized in that** the drive assembly (30) further comprises a first transmission gear (37) coaxially mounted at one end of the power shaft (31), a transmission shaft (371) rotatably mounted on one end of the power shaft (31), a second transmission gear (372) coaxially mounted at one end of the transmission shaft (371) close to the power shaft (31), and a synchronous gear (373) coaxially mounted in a middle of the transmission shaft (371); and
an opening slot (341) is formed inside the foot pedal (34), and the synchronous gear (373) is located inside the opening slot (341); a synchronous rack (342) matched and meshed with the synchronous gear (373) is arranged on an inner wall of one side of the opening slot (341); and the first transmission gear (37) is matched and meshed with the second transmission gear (372), and the second transmission gear (372) has a rotational direction same as a rotational direction of the synchronous gear (373).

6. The pet dog paw cleaner according to claim 5, **characterized in that** an auxiliary rack (343) is arranged on an inner wall of the other side of the opening slot (341) relative to the synchronous rack (342); an auxiliary gear (374) is arranged on the transmission shaft (371), the auxiliary gear (374) and the transmission shaft (371) rotate relative to each other, the auxiliary gear (374) is located inside the opening slot (341), and the auxiliary gear (374) is matched and meshed with the auxiliary rack (343).

7. The pet dog paw cleaner according to claim 6, **characterized in that** the auxiliary rack (343) is arranged in a staggered manner with the synchronous rack (342), and a rotational direction of the auxiliary gear (374) is opposite to that of the synchronous gear (373).

8. The pet dog paw cleaner according to claim 1, **characterized in that** an elastic member (38) is mounted between the foot pedal (34) and the base body (11), and the elastic member (38) is configured to elastically support the foot pedal (34).

9. The pet dog paw cleaner according to claim 1, **characterized in that** when two or more of the cleaning assemblies (20) are provided, rotational directions of the different inner cup bodies (21) are opposite or the same.

10. The pet dog paw cleaner according to claim 1, **characterized in that** a top surface of the paw support (24) is evenly provided with a plurality of anti-slip protrusions; and the base (10) further comprises a drying recess (14) arranged on one side of the receptacle cup (12), and a water-absorbing pad is installed inside the drying recess (14).
